# EUROPEAN PATENT APPLICATION

(11) **EP 0 992 209 A1**
(43) Date of publication of application: **12.04.2000**
(21) Application number: 99203158.3
(22) Date of filing: 27.09.1999
(51) Int. Cl.: A47J 43/28, A47J 45/06, A47J 36/06

(54) **Hand grip for lid**

(30) Priority: 08.10.1998 NL 1010274
(71) Applicant: Innovative Concepts B.V., 3741 CP Baarn (NL)
(72) Inventor: De Vries, Jan, 1213 PZ Hilversum (NL)
(74) Representative: Keijser, Johannes Maurits L.F.

(57) **Abstract**

Hand grip for lid, comprising an elongate element (2) with an attachment means (7) in the vicinity of one end (3) and without an attachment means in the vicinity of the other end (4).

Preferably, the elongate element (2) and the area (6) around the attachment means are of concave and upwardly open design, the area (6) around the attachment means having a greater depth and a greater width than the rest of the length of the elongate element.

A lid has a circumferential area in which lower zones are located further outwards than higher zones, thus forming bearing zones for pans of different diameters, in such a manner that the effective internal lid height increases as the size of the pan becomes greater.

## Description

The invention relates to a hand grip for a lid.

Lids are generally arranged centrally on top of the lid. These hand grips are often round or rounded polygonal knobs, or sometimes, especially for metal lids, they are elongate element with attachment means at both ends.

The first object of the invention is to extend the function of the hand grip.

A further object of the invention is to design a lid in such a way that it can be better adapted to different pan sizes than has hitherto been known, in such a manner that condensation can be reduced and that the lid can be used as a strainer.

According to the basic concept of the invention, the hand grip for a lid comprises an elongate element with an attachment means in the vicinity of one end and without an attachment means in the vicinity of the other end.

A hand grip of this nature can be attached centrally to the lid, while it extends further, without attachment, towards the circumference.

In order also to provide such a grip with the function of a drip tray, according to the invention it is designed in such a way that the elongate element and the area around the attachment means are of concave, upwardly open design.

If the cook needs to drain something, there is no need to use a separate drip tray or to dirty the worktop.

A further extension of the function, specifically to form a spoon holder, is obtained in a design which is characterized in that the cavity in the area around the attachment means has a greater depth and a greater width than the rest of the length of the elongate element. This makes the cavity more or less spoon-shaped, allowing the depth of the scooping surface of a spoon also to be positioned in a deeper cavity than the handle of the spoon. Spoons which are used to stir the pan during cooking often represent a source of contamination to the worktop. This problem is eliminated according to the invention.

In order to make it clear where the hand should be placed on the grip, the end which is remote from and at which the attachment means is arranged has a greater cross section than the centre part.

It is known to design lids with a circumferential area of stepped height, thus forming bearing zones for pans of different diameters. The known lids are designed in such a way that the higher zones are located further outwards. Consequently, the effective internal height of the lid in fact becomes smaller as the size of the pan increases. This is illogical; it would be more logical to increase the effective lid height as the pan size increases, so that a greater volume is obtained in all respects.

According to the invention, this is achieved by designing the stepped circumferential area in such a way that the lower zones lie further outwards than higher zones.

The invention aims to solve a further cooking problem. In many cases, glass lids are used, but condensation on the inside of the lid generally prevents the cook from having a good view of the products being cooked.

The invention proposes to provide the lid with a series of openings within the zone which has the highest bearing surface, which openings are distributed around the surface of the lid. These vent openings allow condensation to be reduced and the contents of the pan to be viewed during the cooking process.

Finally, the handle according to the invention with a support in the vicinity of one end and a freely projecting other end is particularly suitable for a design of the lid in which, furthermore, a plurality of strainer openings are arranged in a sector-shaped area of the lid. This sector may, for example, amount to 120°. If the attachment means for the grip is designed in such a way that it can be fixed in various positions with respect to the lid, it is always possible to find a position in which the hand which holds the grip is outside the main flow of steam during straining. A suitable position can be found both for left-handed people and for right-handed people.

The invention will be explained below with reference to the appended drawing of an exemplary embodiment, in which:
Fig. 1 shows a perspective view of a lid with hand grip according to the invention;
Fig. 2 shows a plan view;
Fig. 3A to 3G show the hand grip separately; specifically, Fig. 3A shows a plan view, Fig. 3B shows a central longitudinal section, Fig. 3C shows a view towards the long side, in the direction of arrow C in Fig. 3A, Fig. 3D shows a cross section in the direction of arrows DD in Fig. 3B, Fig. 3E shows a view towards the knob in the direction of arrow E in Fig. 3C, Fig. 3F shows a view towards the end in the direction of arrow F in Fig. 3A, and Fig. 3G shows a cross section in the direction of arrows GG in Fig. 3B;
Fig. 4 shows a straight view of the lid with the grip, the section of the lid to the right of the axis being shown in cross section.

The hand grip 2 is attached to the centre of the lid 1. The hand grip 2 is elongate, with an attachment means to the lid in the vicinity of one end 3 and without an attachment means at the other end 4, i.e. this end projects freely into the environment. The length of the intervening section 5 in this case corresponds to the width of a hand, so that the grip can be held with one hand in order to lift the lid off the pan. In order for the grip function to be located correctly, the end 4 has a larger cross section than the centre part 5.

The whole of the grip 2 is of concave, upwardly open design.

The area 6 around the attachment point, which is to be described in more detail below, has a greater width and a greater depth than the intervening piece 5.

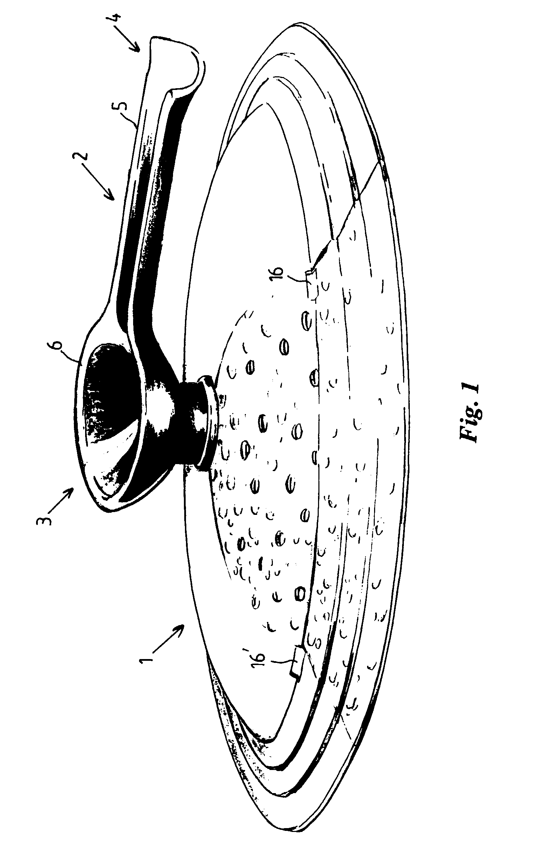

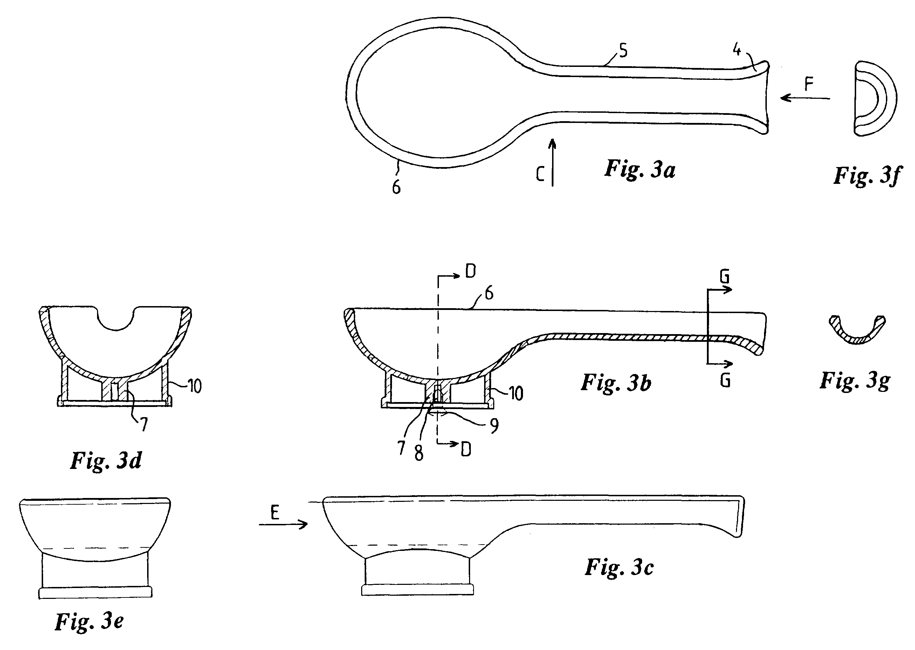

All elements of the shape of the hand grip which have been described so far and can be seen directly from Fig. 1 are also evident, without further explanation, from the detailed views and cross sections shown in Figs. 3A to 3G.

During cooking, a hand grip designed in this way can also function as a drip tray and, moreover, as a spoon holder. The first function is generally fulfilled by a tray which the cook puts down separately, and generally no measures are taken for the second function, resulting in a dirty worktop.

In view of properties of the lid which are to be described in more detail, the invention imposes the requirement, in terms of the attachment of the hand grip to the lid, that the hand grip can be fixed in various positions with respect to the lid. One way of being able to fix the hand grip in any position with respect to the lid is shown in Figs. 3B and 3D. A stub of material 7 which is provided with a cavity 8 which is open on the underside and closed on the top side and into which a screw 9 can be turned from the inside of the lid, is formed integrally at the centre of the cavity of the part 6. With a view to stability of the attachment, a cylindrical wall 10 is arranged around this stub, providing a bearing surface over a greater radius than the stub 7 alone would provide.

This allows attachment in any desired position, in particular in a position which, with respect to the strainer openings which have yet to be described, is suitable for right-handed people, and an opposite position which is suitable for left-handed people.

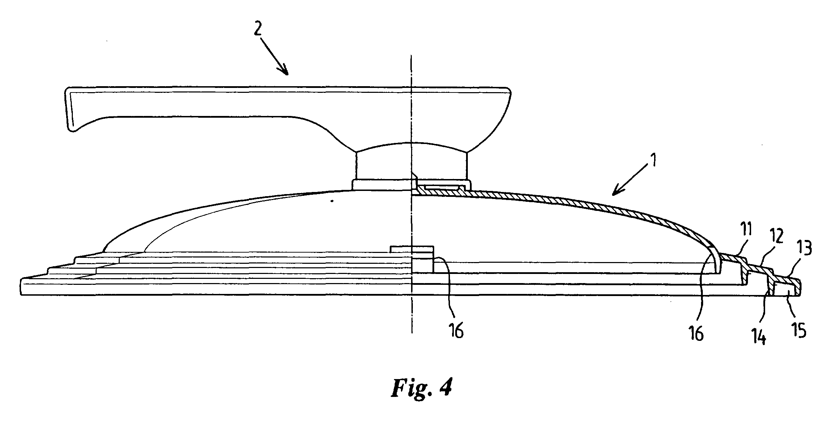

It can be seen even from Fig. 1 that the lid 1 has a circumferential area in which it is possible to distinguish between various zones. This aspect can best be explained with reference to Fig. 4, which shows both a side view and an axial section of the shape of the lid. Three zones 11, 12, 13, which form successively lower steps in the outwards direction, are formed integrally on the more or less conventional concave shape of the centre piece of the lid. On the underside, the zones are delimited by downwardly directed short ribs 14, so that - in this embodiment - three cavities such as 15 are formed, by means of which the lid can be positioned on pans of different diameters. Thus, as the pan diameter becomes smaller, the effective internal height of the lid is reduced.

In this embodiment, four vent openings, such as 16, 16', are arranged within the zone 11 with the highest bearing surface. As a result, moist air is able to escape from inside the pan during the cooking process, so that there is little condensation and the cooking process can be followed better through a lid which is made from transparent material than if the lid is completely covered with drops of condensation on the inside. The fact that these vent openings are arranged within the highest zone 11 means that they are effective for all sizes of pan which the lid fits.

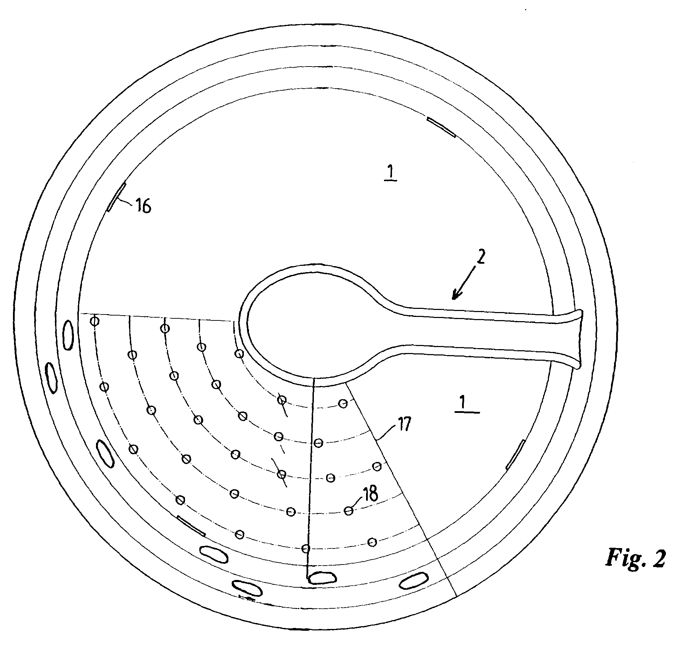

Returning now to Fig. 1, but primarily to Fig. 2, it can be seen that a sector 17 of a circle comprising - in this embodiment - approximately 120° is provided with a relatively large number of further openings. These are strainer openings 18. Although they are shown on arcs of circles, there are no particular requirements imposed on the location of these strainer openings 18. They may be round or elongate. All that is necessary is to create a sufficiently large cross section for straining.

This measure allows the lid 1 to be held pressed against the edge of the pan by means of the grip 2, while the pan is turned on its side and the cooking water can be poured off, while the hand holding the grip 2 will remain largely free of the rising steam emanating from the water which is poured off, due to the position of the grip with respect to the lid, in particular with respect to the sector 17.

It can be seen clearly from Fig. 2 that the position of the grip 2 with respect to sector 17 can be adjusted as desired, in such a way that it can be used for both left-handed and right-handed people. The difference in angle between the two positions will then be approximately 120°.

## Claims

1. Hand grip for lid, comprising an elongate element (2) with an attachment means (7) in the vicinity of one end (3) and without an attachment means in the vicinity of the other end (4).

2. Hand grip according to claim 1, characterized in that the elongate element (2) and the area around the attachment means (7) are of concave, upwardly open design.

3. Hand grip according to claim 1 or 2, characterized in that the cavity in the area (6) around attachment means (7) has a greater depth and a greater width than the rest of the length of the elongate element (2).

4. Hand grip according to one of claims 1 to 3, characterized in that the end (4) which is remote from the end (3) at which the attachment means (7) is arranged has a greater cross section than the centre part (5).

5. Hand grip according to one of claims 1 to 4, characterized in that the attachment means (7) is designed in such a way that the hand grip (2) can be fixed in various positions with respect to the lid (1).

6. Hand grip according to claim 5, characterized in that the attachment means is formed by a stub (7) which is moulded integrally on the underside and has a blind bore (8) which is intended to accommodate a screw (9) which is to be inserted from the underside of the lid (1).

7. Lid provided with a grip according to one of claims 1 to 6.

8. Lid, optionally provided with a hand grip according to one of claims 1-6, with a circumferential area of stepped height, thus forming bearing zones for pans of different diameters, characterized in that the stepped circumferential area (11, 12, 13) is designed in such a way that the lower zones lie further outwards than higher zones.

9. Lid, optionally provided with a handle according to one of claims 1-6, and optionally designed according to claim 8, characterized in that it is provided with a series of openings within the zone (11) which forms the highest bearing surface, which openings are distributed around the surface of the lid.

10. Lid according to claim 9, characterized in that, furthermore, a plurality of strainer openings (18) are arranged in a sector-shaped area (17) of the lid (1).
